# EUROPÄISCHE PATENTSCHRIFT

(11) **EP 0 653 281 B1**
(45) Veröffentlichungstag und Bekanntmachung des Hinweises auf die Patenterteilung: **16.07.1997**
(21) Anmeldenummer: 94115853.7
(22) Anmeldetag: 07.10.1994
(51) Int. Cl.: B29C 45/17

(54) **Kunststoff-Spritzgiessverfahren mit Gaseinleitung**
Plastic injection moulding method with gas introduction
Procédé de moulage par injection de matières plastiques avec introduction de gaz

(30) Priorität: 30.10.1993 DE 4337237
(43) Veröffentlichungstag der Anmeldung: 17.05.1995
(73) Patentinhaber: Bayerische Motoren Werke Aktiengesellschaft, 80788 München (DE)
(72) Erfinder: Specker, Olaf, Dr., D-81373 München (DE); Theissig, Werner, D-80999 München (DE)

(56) Entgegenhaltungen:
- EP-A- 0 321 117
- EP-A- 0 393 315
- EP-A- 0 414 154

## Beschreibung

Die Erfindung betrifft ein Kunststoff-Spritzgießverfahren mit Gaseinleitung in den Innenraum des in einer Spritzgießform zu formenden Bauteiles über eine die Bauteilwand durchdringende Gasnadel. Bekannt sind derartige Verfahren auch unter der Bezeichnung "Gasinnendruck-Verfahren", zum Stand der Technik wird beispielshalber auf die DE 39 13 109 C2 verwiesen.

Mit den Gasinnendruck-Verfahren sind Bauteile mit einem im wesentlichen ringförmigen Innenraum und insbesondere mit ringförmig geschlossenem Gaskanal nur bedingt herstellbar, insbesondere wenn an die Qualität der Oberfläche hohe Anforderungen gestellt werden. Bei ringförmig zu bildenden Gaskanälen ist nämlich das richtige Einleiten des Gases in den Ringkanal ein wesentlicher Prozeßparameter, der die Qualität des Bauteiles beeinflußt. Je nach Komplexität des Bauteiles ist die Reproduzierbarkeit der Einströmrichtung des Gases nicht immer gegeben. Qualitätsmindernd kann sich beim üblichen Gasinnendruck-Verfahren insbesondere bei Bauteilen mit ringförmigen Innenräumen ein sich üblicherweise am Ende des Gaskanales/Innenraumes bildender Materialpfropfen auswirken. Dieser Pfropfen ist dann auf der Bauteil-Oberfläche als sog. Einfallmarkierung sichtbar, was bei Bauteilen mit freiliegender Oberfläche nicht akzeptabel ist.

Aufgabe der Erfindung ist es daher, ein verbessertes Kunststoff-Spritzgießverfahren nach dem Oberbegriff des Anspruchs 1 aufzuzeigen.
Zur Lösung dieser Aufgabe ist vorgesehen, daß in die Spritzgießform vor dem Einbringen der Kunststoffmasse ein sich an die Gasnadel anschließendes Einsatzteil eingelegt wird, durch das ein Gasleitkanal verläuft. Vorteilhafte Weiterbildungen sind Inhalt der Unteransprüche.

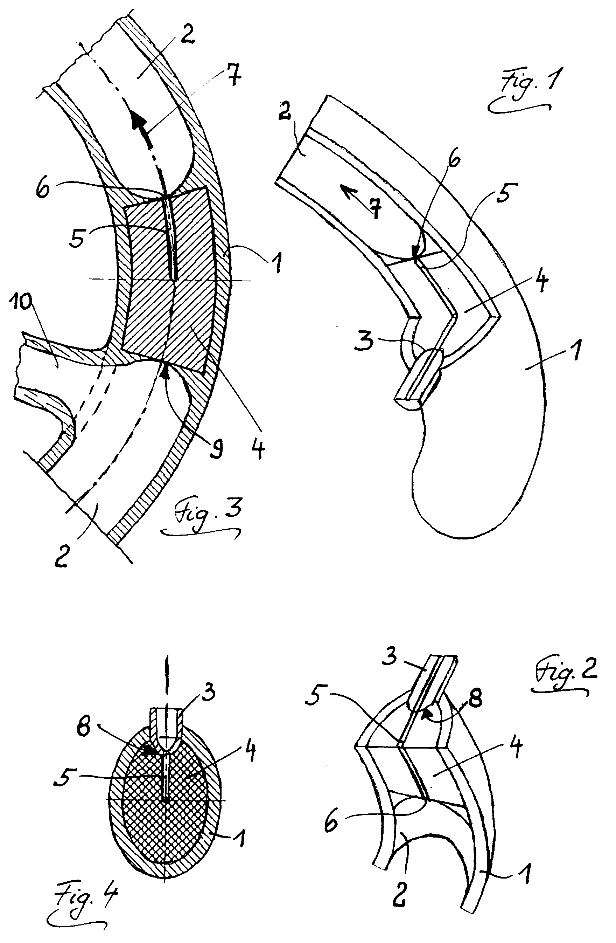

Näher erläutert wird die Erfindung anhand von Prinzipskizzen, die ein bevorzugtes Ausführungsbeispiel in Teilansichten (Fig. 1, Fig. 2: perspektivisch, Fig. 3: Querschnitt, Fig. 4: Schnitt A-A aus Fig. 3) zeigen.

Mit der Bezugsziffer 1 ist ein in einer nicht dargestellten Spritzgießform zu formendes Kunststoff-Bauteil bezeichnet. Dieses Bauteil 1, von dem lediglich ein Abschnitt dargestellt ist, besitzt einen im wesentlichen ringförmigen Innenraum 2, d. h. das beispielsweise ringförmige Bauteil ist hohl ausgeführt. Das gesamte Bauteil 1 bzw. der Innenraum 2 wird dadurch hergestellt, daß in eine entsprechende Spritzgießform zunächst eine Kunststoffmasse eingebracht und diese danach durch Gaseinleitung quasi aufgeblasen wird, so daß sich die noch zähflüssige Kunststoff-Schmelze an die Innenwand der Spritzgießform anlegt. Das Einbringen des Gases in den Innenraum 2 erfolgt dabei über eine Gasnadel 3, die die spätere Wand des Bauteiles 1 durchdringt.

Um eine für die Formgebung des Bauteiles 1 optimale Gasausströmung in den Innenraum 2 zu erzielen, wird vor Einbringen der Kunststoffmasse in die Spritzgießform ein Einsatzteil 4 eingelegt, das sich an die Gasnadel 3 anschließt und durch das ein Gasleitkanal 5 verläuft. Der Gasleitkanal 5 geht direkt von der Mündung der Gasnadel 3 aus und mündet seinerseits in einer Auslaßbohrung 6 an lediglich einer der dem Innenraum 2 zugewandten Stirnseiten des Einsatzteiles 4. Hierdurch kann eine gezielte Gasströmung gemäß Pfeilrichtung 7 im Innenraum 2 des zu formenden Bauteiles 1 erzeugt werden. Sowohl die Ausströmrichtung des Gases aus dem Einsatzteil 4 als auch die Gestalt des Einsatzteiles 4 wird dabei entsprechend der gewünschten Geometrie des Bauteiles 1 optimiert.

Das Einsatzteil 4 besteht im wesentlichen aus dem gleichen Material wie das Kunststoff-Bauteil 1 und wird bei geöffneter Spritzgießform vor Einbringen der Kunststoffmasse mit seiner konischen Aufnahmebohrung 8, an die sich der Gasleitkanal 5 anschließt - vgl. Fig. 4 - auf die Gasnadel 3 aufgesteckt. Nach Schließen der Spritzgießform füllt das Einsatzteil 4 den Bereich der Gaseinleitung ganz oder teilweise aus. Anschließend wird die Kunststoff-Schmelze in die Spritzgießform eingebracht. Beim Kontakt mit der eingespritzten Schmelze verbindet sich das Einsatzteil 4 durch Anschmelzen seiner Oberfläche mit dem Bauteil 1 und wird somit zu einem vollwertigen Bauteil-Bestandteil. Der über die Gasnadel 3 eingebrachte Gasstrom wird dabei durch das Einsatzteil 4 in die vorgegebene Richtung 7 geleitet. Das Umspritzen des Einsatzteiles 4 mit einer entsprechenden Kunststoffschicht verleiht dem Bauteil 1 eine homogene Oberfläche im Zusammenflußbereich ohne Einfallstellen.

Das Einsatzteil 4 kann beispielsweise in der gleichen Spritzgießform wie das Bauteil 1 vorgefertigt worden sein oder auch in einer separaten Form im wesentlichen aus dem gleichen Material wie das Bauteil 1 hergestellt werden. Da mit diesem Einsatzteil 4 eine gezielte Gasführung ermöglicht wird, ergibt sich aufgrund der verbesserten Prozeßsicherheit eine reduzierte Ausschußquote. Selbstverständlich kann das Einsatzteil 4 auch dazu verwendet werden, mit Hilfe der Stirnwand 9, die der Auslaßbohrung 6 des Gasleitkanales 5 gegenüberliegt, die Kunststoff-Schmelze sowie das Gas im Fertigungsprozeß gezielt umzuleiten, beispielsweise in einen Abzweig 10. Jedoch kann dies sowie weitere Details durchaus abweichend vom gezeigten Ausführungsbeispiel gestaltet sein, ohne den Inhalt der Patentansprüche zu verlassen.

## Patentansprüche

1. Kunststoff-Spritzgießverfahren mit Gaseinleitung in den Innenraum (2) des in einer Spritzgießform zu formenden Bauteiles (1) über eine die Bauteilwand durchdringende Gasnadel (3),
dadurch gekennzeichnet, daß in die Spritzgießform vor dem Einbringen der Kunststoffmasse ein sich an die Gasnadel (3) anschließendes Einsatzteil (4) eingelegt wird, durch das ein Gasleitkanal (5) verläuft.

2. Spritzgießverfahren nach Anspruch 1,
dadurch gekennzeichnet, daß ein Bauteil (1) mit einem im wesentlichen ringförmigen Innenraum (2) gefertigt wird und der Gasleitkanal (5) lediglich an einer der dem Innenraum (2) zugewandten Stirnseiten des Einsatzteiles (4) mündet.

3. Spritzgießverfahren nach Anspruch 1 oder 2,
dadurch gekennzeichnet, daß das Einsatzteil (4) aus einem Kunststoffmaterial vorgefertigt wird, das im wesentlichen gleich dem Kunststoffmaterial des zu formenden Bauteiles (1) ist, um mit diesem eine innige Verbindung zu bilden.

4. Spritzgießverfahren nach einem der Ansprüche 1 bis 3,
dadurch gekennzeichnet, daß das Einsatzteil (4) eine konische Aufnahmebohrung (8) für die Gasnadel (3) aufweist, an die sich der Gasleitkanal (5) anschließt, und mittels derer das Einsatzteil (4) auf die Gasnadel (3) aufgesteckt wird.

5. Spritzgießverfahren nach einem der vorangegangenen Ansprüche,
dadurch gekennzeichnet, daß mit Hilfe der Einsatzteil-Stirnwand (9), die der Auslaßbohrung (6) des Gasleitkanales (5) gegenüberliegt, die Kunststoff-Schmelze sowie das Gas umgeleitet werden.

## Claims

1. A method for injection moulding of plastics material with gas introduced into the cavity (2) of a component part (1) to be moulded in an injection mould via a gas needle (3) penetrating through the wall of the component part, characterised in that an insert (4) is placed in the injection mould and connected to the gas needle (3) prior to the introduction of the polymer mass, through which a gas conducting channel (5) runs.

2. An injection moulding method according to claim 1,
characterised in that a component part (1) with a substantially annular cavity (2) is manufactured and the gas conducting channel (5) opens solely into one of the front faces of the insert (4) facing the cavity (2).

3. An injection moulding method according to claim 1 or claim 2,
characterised in that the insert (4) is pre-fabricated from a plastics material which is substantially the same as the plastics material of the component part (1) to be moulded, in order to form an homogenous connection with it.

4. An injection moulding method according to any one of claims 1 to 3,
characterised in that the insert (4) has a conical take-up hole (8) for the gas needle (3) to which the gas conducting channel (5) is connected and by means of which the insert (4) is plugged onto the gas needle (3).

5. An injection moulding method according to any one of the preceding claims,
characterised in that, with the aid of the front face (9) of the insert, which lies opposite the discharge hole (6) of the gas conducting channel (5), both the plastics material melt and the gas are diverted.

## Revendications

1. Procédé d'injection de matière plastique avec introduction de gaz dans le volume intérieur (2) de la pièce (1) moulée par injection, à l'aide d'une aiguille à gaz (3) traversant la paroi de la pièce,
caractérisé en ce qu'
on place un insert (4) relié à l'aiguille à gaz (3) dans le moule d'injection avant d'y introduire la masse de matière plastique, insert traversé par un canal de gaz (5).

2. Procédé d'injection selon la revendication 1,
caractérisé en ce qu'
on fabrique une pièce (1) ayant un volume intérieur (2) essentiellement annulaire et le canal de gaz (5) débouche uniquement sur l'une des faces frontales de l'insert (4) tournée vers le volume intérieur (2).

3. Procédé d'injection selon la revendication 1 ou 2,
caractérisé en ce que
l'insert (4) est préfabriqué en une matière plastique qui est essentiellement la même que celle de la pièce (1) à réaliser pour former avec celle-ci une liaison intime.

4. Procédé d'injection selon l'une des revendications 1 à 3,
caractérisé en ce que
l'insert (4) comporte un perçage de réception (8), conique pour recevoir l'aiguille à gaz (3), perçage qui se poursuit par le canal de gaz (5) et à l'aide duquel l'insert (4) est placé sur l'aiguille à gaz (3).

5. Procédé d'injection selon l'une des revendications précédentes,
caractérisé en ce qu'
à l'aide de la paroi frontale (9) de l'insert qui est en regard du perçage de sortie (6) du canal de gaz (5), on dévie la masse de matière plastique et le gaz.
